# EUROPEAN PATENT SPECIFICATION

(11) **EP 2 067 953 B1**
(45) Date of publication and mention of the grant of the patent: **29.10.2014**
(21) Application number: 07122118.8
(22) Date of filing: 03.12.2007
(51) Int. Cl.: F01P 11/02, G01F 23/16, G01F 23/26, G01F 23/60, F01P 11/18

(54) **Integrated pressure and level sensor of a cooling engine comprising said sensor**
Integrierter Druck- und Pegelsensor einer Kühlmaschine mit diesem Sensor
Capteur de niveau et de pression intégré d'un moteur à refroidissement comportant un tel capteur

(43) Date of publication of application: 10.06.2009
(73) Proprietor: IVECO S.p.A., 10156 Torino (IT)
(72) Inventor: Scavarda, Gianfranco, 10080 Lusiglie (IT)
(74) Representative: Borsano, Corrado

(56) References cited:
- EP-A- 0 224 323
- DE-A1- 2 509 995
- DE-A1- 4 023 611
- US-A1- 2004 216 522

## Description

### Field of the invention

This invention relates to the field of the sensors in internal-combustion engines and in particular to an integrated pressure and level sensor of a cooling fluid and engine comprising said sensor.

### Description of the prior art

Following the technological evolution, the expansion tanks of the vehicles with liquid cooling were first equipped with level sensors of cooling fluid, as to promptly alert the driver of the lowering of the fluid. According to this aim, said sensor has usually been placed in a housing on a lateral wall of the tank, near to the average level of the liquid.

In a subsequent stage, said tanks have been equipped with a pressure sensor, as to promptly alert the driver of the reaching of an operative temperature that is not compatible with the characteristics of the vehicle, because the overheating of the air and of the steam contained in the upper part of the expansion tank determine an increase of the internal pressure. In this case, the preferred housing of the sensor is on the top of the expansion tank and the connection system of the sensor has to be gas-tight because of the higher pressure that can be reached at normal rpm.

These necessities bring the manufacturers of internal-combustion engines to provide appropriate wiring in order to pick up the signals generated by said two sensors that are usually placed far from each other. They also have to provide as many connection systems to the expansion tank, satisfying the technical requirements mentioned above.

Moreover, the use of two distinct components makes the stock management more complicated, as regards the code numbers and the supply which depends on orders and on stocks on hand.

Furthermore, the assembling of an endothermic engine that includes said sensors is laborious and time-consuming, because of the need to mount and to electrically connect two distinct sensors. Finally, since there is only one warning light for both sensors, it is expensive and complicated to distinguish which sensor is not working.

A level sensor including a pressure sensor is shown in DE 4023611 A1.

### Summary of the invention

The aim of this invention is to provide an integrated pressure and level sensor of cooling fluids able to reduce the costs of the stock management, to reduce the assembling time and to simplify the electrical system that has the function to pick up the signals produced by said integrated sensor.

Therefore, the aim of this invention is to provide an integrated pressure and level sensor of cooling fluids that, according to claim 1, integrates in one body a pressure sensor and a level sensor.

According to another aspect of the invention said device can be used in endothermic engines and, in particular, when in the expansion tanks of as many engines the free surface of the cooling fluid is at the same level in respect to the top of the expansion tank and especially to the connection point between the tank and the sensor according to this invention.

Therefore, the aim of this invention is also to provide an endothermic engine, according to claim 8, comprising a pressure and level sensor of cooling fluids that integrates in a single body a pressure sensor and a level sensor.

The dependent claims describe the preferred embodiments of the invention.

### Brief description of the Figures

Further characteristics and advantages of the invention will be more apparent in light of a detailed description of a preferred, but non-exclusive, embodiment of an integrated pressure and level sensor of cooling fluids, shown with the help of the drawings that are attached hereto, which are merely illustrative and not limitative, in which:

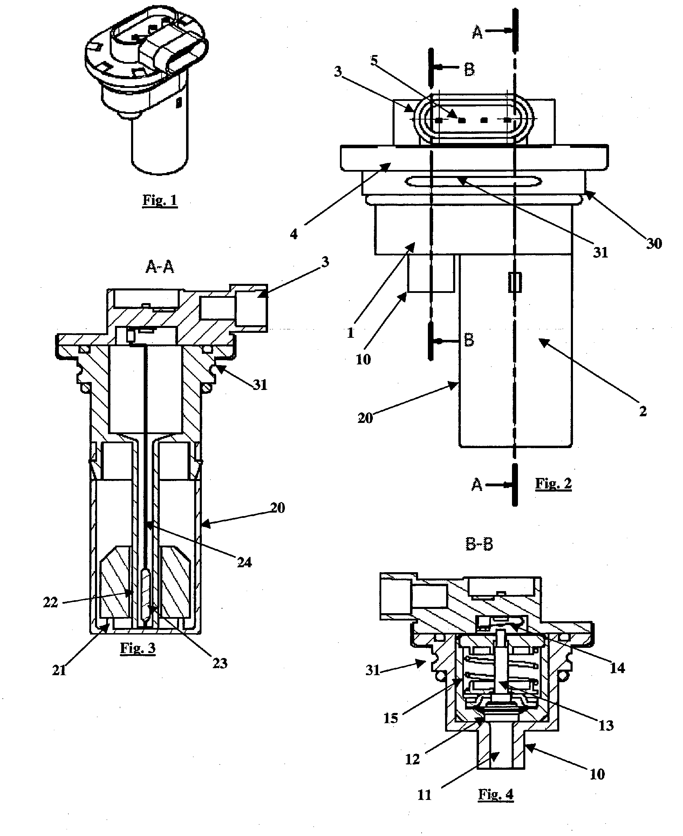

Fig. 1 shows a three-dimensional view of the pressure sensor that integrates a level sensor;
Fig. 2 shows a front view of the sensor in the previous figure;
Fig. 3 shows the section AA of the view in Fig. 2;
Fig. 4 shows the section BB of the view in Fig. 2;

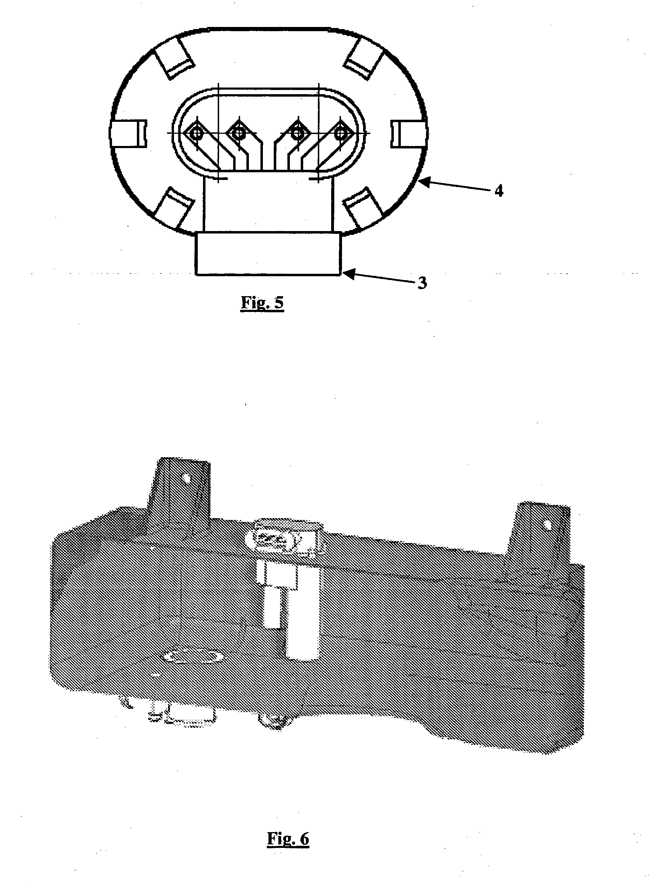

Fig. 5 shows a top view of the sensor in figure 1;
Fig. 6 shows the whole expansion tank comprising said sensor;
Fig. 7 shows a variant of the sensor.

### Detailed description of a preferred embodiment of the invention

According to the figures from 1 to 5, the sensor according to this invention comprises in a single body 30, a pressure sensor 1 and a level sensor of a cooling fluid 2.

In a preferred embodiment of the invention, said pressure sensor comprises a first lower extension 10, in which there is a hole 11, through which a gas under pressure comes into contact with a membrane 12, integral with and axis 13 that is perpendicular to the plane of the membrane itself. The function of the axis is to open the contact 14 which is of the "normally closed" type, while said counter spring 15 opposes to said pressure, lowering the membrane. When the pressure in an expansion tank exceeds the force exerted by said counter spring, the membrane rises and said contact 14 is opened.

Otherwise, if the contact 14 is of the "normally open" type, said axis 13 has the function to close the contact, if the pressure of the controlled gas exceeds the force exerted by the counter spring.

Said preferred embodiment of said level sensor, comprises a second lower extension 20 cylindrical in shape, provided with at least one hole 21 which communicates with a compartment 22 that is inside said second lower extension. This allows a toroidal float 23 to go up along said compartment, short-circuiting some metal foils placed on a thread 24 coaxial with the toroid, when the cooling fluid floods said compartment.

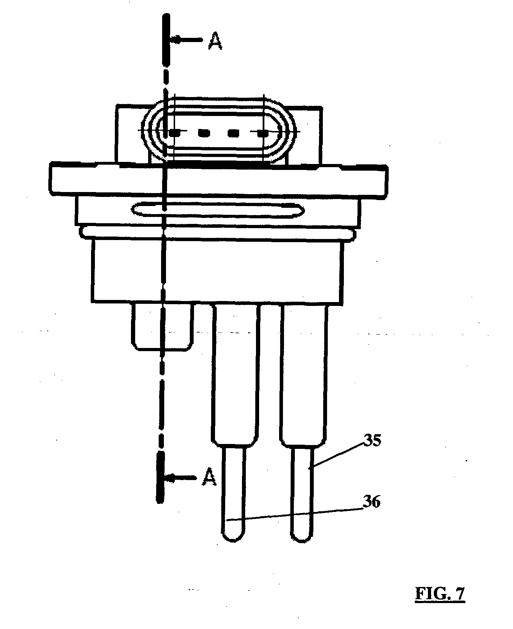

In a preferred alternative embodiment, said level sensor comprises a sensor of the capacitive type, as shown in fig. 7, comprising two electrodes 35, 36 which, when they come into contact with the fluid in which they are immersed, close or open an electric circuit; in other words, the fluid itself act as conductor of the signal through the electrodes themselves. The signal obtained this way is used by the instruments on board in order to inform the driver about the status of the level of the fluid in the tank.

The electric signals produced by both sensors are picked up in the terminal board 3 containing at least three metal contacts 5. If the ground is not common, then the metal contact 5 are at least four.

Said lower extensions 10 and 20, that are separated in their lower part, join in their upper part and form a single body 30 with profile 4, that has the function to fix on the top of the expansion tank of the cooling fluid and seal it.

The seal is made by means of a collar with the edge raised on the tank, where the body 30 of the sensor fixes and is hold by means of an open clip spring which fixes in provided grooves 31 situated in the body 30.

The second lower extension 20 of the level sensor is long in relation to the distance between the assembling point and the free surface of the cooling fluid.

The advantage is that a single device controls at the same time the pressure and the level of a cooling fluid in an expansion tank of an endothermic engine.
Therefore, a simplified assembling results also in a simplified electrical system of the vehicle with such sensor and in a simpler stock management.

The particular embodiments described here do not limit the scope of this invention which covers all the alternative embodiments defined by the claims.

## Claims

1. Pressure and level sensor of cooling fluids integrating in a single body (30) a pressure sensor and a level sensor (2), **characterized in that** said the sensor also comprises a terminal board (3) containing at least three metal contacts (5) with the function to pick up the signals produced by the respective sensors.

2. Sensor according to claim 1, wherein said pressure sensor comprises a first lower extension (10), in which there is a hole (11), through which a controlled gas is free to come into contact with a membrane (12), integral with an axis (13) perpendicular to the plane of the membrane itself, with the function to open a contact (14) when the pressure of the gas is such as to raise the membrane, overcoming the effect of a counter spring (15), which opposes the raising of the membrane.

3. Sensor according to claim 1, wherein said level sensor comprises a second lower extension (20) cylindrical in shape, provided with at least one hole (21) which communicates with a compartment (22) that is inside said second lower extension (20), where there is a toroidal float (23) concentric with a thread (24) equipped with metal foils, so that when the cooling fluid floods said compartment (22), said float goes up, short-circuiting said metal foils placed on the thread.

4. Sensor according to claim 1, wherein said level sensor comprises a capacitive sensor, comprising at least two electrodes (35, 36) which, when they come into contact with said fluid, close and open an electric circuit.

5. Sensor according to claim 2, wherein said second lower extension (20) is cylindrical in shape and is long enough to effectively reach the free surface of the cooling fluid.

6. Sensor according to claim 1, wherein said body (30) comprises a profile (4) with the function to fix on the top of the expansion tank of the cooling fluid and seal it.

7. Expansion tank of cooling fluid **characterized by** a single joint part for an integrated pressure and level sensor of the cooling fluid, according to any of the claims from 1 to 5.

8. Endothermic engine provided with liquid cooling **characterized in that** it comprises an expansion tank provided with a single integrated pressure and level sensor of the cooling fluid according to any of the claims from 1 to 6.

9. Vehicle with endothermic engine provided with liquid cooling **characterized in that** it comprises an expansion tank provided with a single integrated pressure and level sensor of the cooling fluid according to any of the claims from 1 to 6.

## Patentansprüche

1. Druck- und Pegelsensor für Kühlfluide, der in einen einzelnen Körper (30) einen Drucksensor und einen Pegelsensor (2) integriert, **dadurch gekennzeichnet, dass** der Sensor auch eine Anschlussplatte (3) umfasst, die zumindest drei Metallkontakte (5) mit der Funktion enthält, die Signale, die von den jeweiligen Sensoren erzeugt werden, aufzunehmen.

2. Sensor nach Anspruch 1, wobei der Drucksensor eine erste untere Verlängerung (10) umfasst, in der sich ein Loch (11) befindet, durch das ein gesteuertes Gas frei in Kontakt mit einer Membran (12) treten kann, die einteilig mit einer Achse (13) rechtwinklig zu der Ebene der Membran selbst ist, mit der Funktion, einen Kontakt (14) zu öffnen, wenn der Druck des Gases so ist, dass die Membran angehoben wird, wobei die Wirkung einer Gegenfeder (15), die dem Anheben der Membran entgegen wirkt, überwunden wird.

3. Sensor nach Anspruch 1, wobei der Pegelsensor eine zweite untere Verlängerung (20) mit zylindrischer Form umfasst, die mit zumindest einem Loch (21) versehen ist, das mit einem Fach (22) kommuniziert, das sich innerhalb der zweiten unteren Verlängerung (20) befindet, wobei ein Ringschwimmer (23) konzentrisch mit einem Gewinde (24), das mit Metallfolien ausgestattet ist, vorgesehen ist, so dass, wenn das Kühlfluid das Fach (22) flutet, der Schwimmer nach oben geht, wobei die Metallfolien, die an dem Gewinde angeordnet sind, kurzgeschlossen werden.

4. Sensor nach Anspruch 1, wobei der Pegelsensor einen kapazitiven Sensor umfasst, der zumindest zwei Elektroden (35, 36) umfasst, die, wenn sie mit dem Fluid in Kontakt treten, eine elektrische Schaltung schließen und öffnen.

5. Sensor nach Anspruch 2, wobei die zweite untere Verlängerung (20) eine zylindrische Form besitzt und lang genug ist, um die freie Fläche des Kühlfluides wirksam zu erreichen.

6. Sensor nach Anspruch 1, wobei der Körper (30) ein Profil (4) mit der Funktion zur Fixierung an dem oberen Teil des Expansionstanks des Kühlfluides und zur Abdichtung desselben umfasst.

7. Expansionstank für Kühlfluid, **gekennzeichnet durch** ein einzelnes Verbindungsteil für einen integrierten Druck- und Pegelsensor des Kühlfluides nach einem der Ansprüche 1 bis 5.

8. Endothermer Motor, der mit Flüssigkühlung versehen ist, **dadurch gekennzeichnet, dass** er einen Expansionstank umfasst, der mit einem einzelnen integrierten Druck- und Pegelsensor des Kühlfluids nach einem der Ansprüche 1 bis 6 versehen ist.

9. Fahrzeug mit endothermem Motor, der mit Flüssigkeitskühlung versehen ist, **dadurch gekennzeichnet, dass** er einen Expansionstank umfasst, der mit einem einzelnen integrierten Druck- und Pegelsensor des Kühlfluids nach einem der Ansprüche 1 bis 6 versehen ist.

## Revendications

1. Capteur de pression et de niveau de fluides de refroidissement, intégrant, dans un seul corps (30), un capteur de pression et un capteur de niveau (2), **caractérisé en ce que** ledit capteur comprend également une plaque à bornes (3) contenant au moins trois contacts métalliques (5) ayant pour fonction de capter les signaux produits par les capteurs respectifs.

2. Capteur selon la revendication 1, dans lequel ledit capteur de pression comprend un premier prolongement inférieur (10), dans lequel il y a un trou (11), à travers lequel un gaz contrôlé est libre d'entrer en contact avec une membrane (12), intégré avec un axe (13) perpendiculaire au plan de la membrane elle-même, ayant pour fonction d'ouvrir un contact (14) lorsque la pression du gaz est telle que la membrane s'élève, excédant l'effet d'un contre-ressort (15), qui s'oppose à l'élévation de la membrane.

3. Capteur selon la revendication 1, dans lequel ledit capteur de niveau comprend un second prolongement inférieur (20) de forme cylindrique, pourvu d'au moins un trou (21) qui communique avec un compartiment (22) qui est à l'intérieur dudit second prolongement inférieur (20), où il y a un flotteur toroïdal (23) concentrique avec un filet (24) équipé de feuilles métalliques, pour que, lorsque le fluide de refroidissement remplit ledit compartiment (22), ledit flotteur monte, court-circuitant lesdites feuilles métalliques placées sur le filet.

4. Capteur selon la revendication 1, dans lequel ledit capteur de niveau comprend un capteur capacitif, comprenant au moins deux électrodes (35, 36) qui, lorsqu'elles entrent en contact avec ledit fluide, ferment et ouvrent un circuit électrique.

5. Capteur selon la revendication 2, dans lequel ledit second prolongement inférieur (20) présente une forme cylindrique et est suffisamment long pour atteindre en réalité la surface libre du fluide de refroidissement.

6. Capteur selon la revendication 1, dans lequel ledit corps (30) comprend un profil (4) avec la fonction de se fixer par-dessus le réservoir d'expansion du fluide de refroidissement et l'étanchéiser.

7. Réservoir d'expansion de fluide de refroidissement, **caractérisé par** une seule partie conjointe pour un capteur intégré de pression et de niveau du fluide de refroidissement, selon une quelconque des revendications 1 à 5.

8. Moteur endothermique pourvu d'un refroidissement par liquide, **caractérisé en ce qu'**il comprend un réservoir d'expansion pourvu d'un seul capteur intégré de pression et de niveau du fluide de refroidissement selon une quelconque des revendications 1 à 6.

9. Véhicule avec moteur endothermique pourvu d'un refroidissement par liquide, **caractérisé en ce qu'**il comprend un réservoir d'expansion pourvu d'un seul capteur intégré de pression et de niveau du fluide de refroidissement selon une quelconque des revendications 1 à 6.
